# EUROPEAN PATENT APPLICATION

(11) **EP 4 562 995 A1**
(43) Date of publication of application: **04.06.2025**
(21) Application number: 24210424.8
(22) Date of filing: 01.11.2024
(51) Int. Cl.: A01F 15/08, A01F 15/07

(54) **BALER AND METHOD OF BALING**

(30) Priority: 01.12.2023 GB 202318413
(71) Applicant: Kuhn-Geldrop B.V., 5667 KP Geldrop (NL)
(72) Inventor: DE BRESSER, Jelle Gerardus Wilhelmus Maria, 5595 HL LEENDE (NL); FIDDELAERS, Joannes Leonardus, 6027 PJ SOERENDONK (NL); TENBULT, Henricus Theodorus Hubertus, 5531 KL BLADEL (NL)
(74) Representative: Murgitroyd & Company

(57) **Abstract**

In the present disclosure, there is provided an agricultural baler. The agricultural baler may comprise a frame. The agricultural baler may further comprise a bale chamber for compressing collected crops and forming them into a bale. The bale chamber may comprise two side walls and a plurality of compression elements arranged in a substantially circular arrangement. The compression elements may extend between and be rotatably carried by the side walls. The bale chamber may comprise a front section comprising at least one compression element, an upper section comprising at least one compression element and a lower section comprising at least one compression element. The front section may be fixedly attached to the frame. The upper section may be pivotally attached to the front section. The lower section may be moveably attached to the frame. The lower section may perform a first movement wherein the lower section moves from a baling position to a releasing position wherein the bale is released from a grasp of the at least one compression element in the front section. The lower section may perform a second movement, wherein the lower section moves from the releasing position to an ejecting position to eject the bale from the bale chamber. The bale may follow a different trajectory in the first movement as compared to in the second movement. There is further provided a baling method.

## Description

The present invention relates to a baler for baling agricultural crops. The present invention also relates to an agricultural baling method and a combination baler and bale wrapper. In particular, but not exclusively, the present invention relates to an agricultural baler for forming cylindrical bales from harvested crops with a double-action bale chamber section.

Balers for forming cylindrical bales of agricultural crop bale material are well known, and such bales are usually referred to as "round" bales. The baler has a bale chamber within which a cylindrical bale can be formed, means for feeding bale material into the bale chamber, and an arrangement of pressing or compression elements, for example a series of circumferentially spaced rollers and/or a set of belts, chains and/or slats supported by rollers, which define a part-cylindrical surface of the bale chamber.

During forming and compressing of the crops into a bale, the compression elements in the bale chamber interact with the harvested crop. The more crop that is added to the bale chamber, the more the compression elements interact with the crop. At a certain moment, there is enough crop in the bale chamber for the crop to start to rotate into a bale. As long as the compression rollers are rotating, they keep the growing bale rotating, thus compressing and forming the bale. Because of the compression of the crop, the crop applies a growing expansion force onto the compression rollers. At a certain moment, the force that is applied to the compression elements has reached a maximum which corresponds to a desired compression level. In other embodiments the size and/or shape, for example the diameter of the round bale, is monitored and at a certain moment, when a desired size and/or shape of the bale has been reached, the collection of further crop is stopped at this point and the bale is bound with binding material. Subsequently the bale is ejected from the bale chamber into a field or the bale is transferred from the bale chamber to for example a bale wrapper, and a new process of collecting, compressing and forming crops into a bale is started.

Certain art of agricultural mobile balers or combination baler / bale wrapper machines comprise a bale chamber comprising three sections of compression elements: a front section of compression elements, a top/upper/rear section of compression elements, and a lower section of compression elements.

Those balers and combination baler / bale wrapper machines may have an arrangement in which the ejection of the bale from the bale chamber is done by the lower section of compression elements in a generally upwardly outwardly direction. A potential disadvantage of this way of ejecting a bale from the bale chamber, is that during ejection the bale could scrape or rub along the compression elements in the front section, which can lead to damage of the binding material around the bale, or can lead to damage of the bale itself.

Upon initially opening the bale chamber, the compressed and bound bale may expand due to the compression of the crop. The binding material, which has a certain degree of elasticity, is not able to keep the bale in the exact size as defined by the closed bale chamber. In particular, dryer crops have the tendency to expand more than wetter crops. Also, upon opening the bale chamber, the compression elements in the bale chamber loosen their grip on the bale. As a result, the bale may not keep its rotational speed. The mechanism of the bale expanding and the compression elements losing grip on the bale may lead to the compression elements scraping the bale and damaging the binding material of the bale and damaging the bale itself.

Damage to the binding material can result in the bale losing its compression level and cylindrical shape completely or partially. When the shape is lost completely, all the harvested material collected in the bale is spread around the baler which costs a lot of time and effort to clean up before the baling operations can continue. When the shape is lost partially, the bale may not be suitable for use in the next operational step, for example the wrapping of the bale in a baler / bale wrapper combination or transport and storage of the bales. In case of binding with a (stretch) film, even small amounts of damage (e.g. holes) to the film may lead to a decrease of the quality of the conservation of the crops in the bale, making those crops unfit for use as farm animal fodder.

An agricultural baler may be pulled by a tractor and may also be driven by the power take off of the tractor. The baler may be self-propelled or stationary. In a stationary set up the crops may be brought to the baler.

The bale material, for example agricultural crops, may include grass, which may be mowed, wilted, collected and compressed into bales for easy transport and conservation of the crops. The bale material, prior to baling, may be picked up/gathered from the ground by a pick-up device. The bale material may optionally be processed by a cutting device. The baler may comprise a conveying device for conveying the picked-up crops into the bale chamber, which may comprise a pair of side panels and a number of pressing/compression elements, for example rotating compression rollers and/or belts, chains and/or slats. The conveying device may comprise a rotor and a set of knives interacting with the rotor to cut the collected crop into smaller pieces. The bale chamber may be formed by two spaced apart substantial vertical oriented side walls, a set of compression elements, positioned in a circular arrangement around the bale chamber and extending between and rotatably carried by the side walls. Due to this formation and a defined length of each compression element, the bale chamber has the volume of a cylinder in order to produce cylindrical bales, also called 'round' bales. The bale material is tumbled and/or rolled within the bale chamber and compressed by the compression elements forming a cylindrical bale. Once the bale has reached a predetermined size and/or compression level the feeding is stopped and the bale is then bound with a binding material, which binds the compressed bale material together under pressure in order for the bale to substantially keep its size and compression level. The finished bale is then ejected from the bale chamber and the process of collecting new bale material and forming a new bale is started.

The bale chamber typically has a feed opening through which the bale material is fed into the bale chamber as the bale is formed. The feed opening may be located between a pair of pressing elements, for example a pair of compression rollers or belt/chain/slat support rollers, which are spaced apart to form the feed opening.

In many balers the bale material is bound using twine and/or net binding material. Lately balers have been developed that use stretch film binding material to bind the bale.

Certain problems can sometimes arise in relation to the binding material if it catches, grasps or rubs against any part of the baling chamber following binding, if relative movement is caused between the binding material and the part of the baling chamber it contacts. The binding material may be very sensitive to damage and may easily tear. As a result, the binding material applied to the surface of the bale can become damaged such that it no longer binds the bale, or for example no longer applies sufficient counter force for the bale to keep its compression level.

It is desirable to provide a baler that mitigates one or more of the aforesaid problems.

The invention is defined in any independent claims. Optional embodiments are set out in the dependent claims.

The invention will now be described, by way of example only, in relation to the enclosed drawings, in which:
- Figure 1 is a simplified isometric view of an agricultural baler;
- Figure 2a is a simplified side view of a bale chamber of a baler in a baling position;
- Figure 2b is a simplified side view of a bale chamber of a baler, between the baling position and a releasing position;
- Figure 2c is a simplified side view of a bale chamber of a baler, in a releasing position;
- Figure 2d is a simplified side view of a bale chamber of a baler, in an ejecting position;
- Figure 3 is a simplified side view of a baler, when attached to a tractor;
- Figure 4 is a simplified side view of a combination baler and bale wrapper, when attached to a tractor;
- Figure 5a is a simplified side view of an upwardly ejection of a bale from a bale chamber;
- Figure 5b is a simplified side view of a downwardly ejection of a bale from a bale chamber;
- Figure 6 is a simplified side view of a bale chamber, where a front section is moving from a baling position to a releasing position;

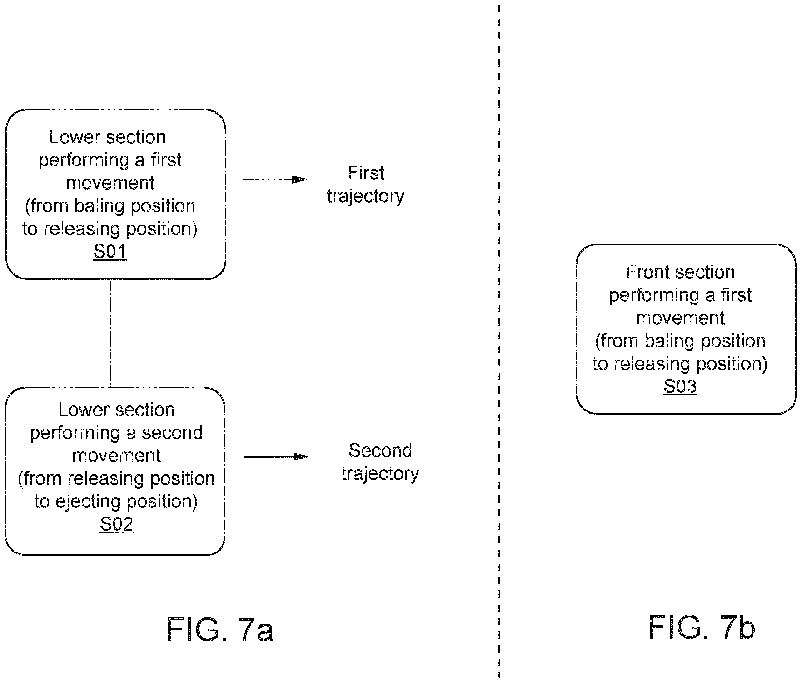

- Figure 7a is simplified flowchart of a method for releasing and ejecting a bale from an agricultural baler; and
- Figure 7b is a simplified flowchart of another method for releasing and ejecting a bale from an agricultural baler.

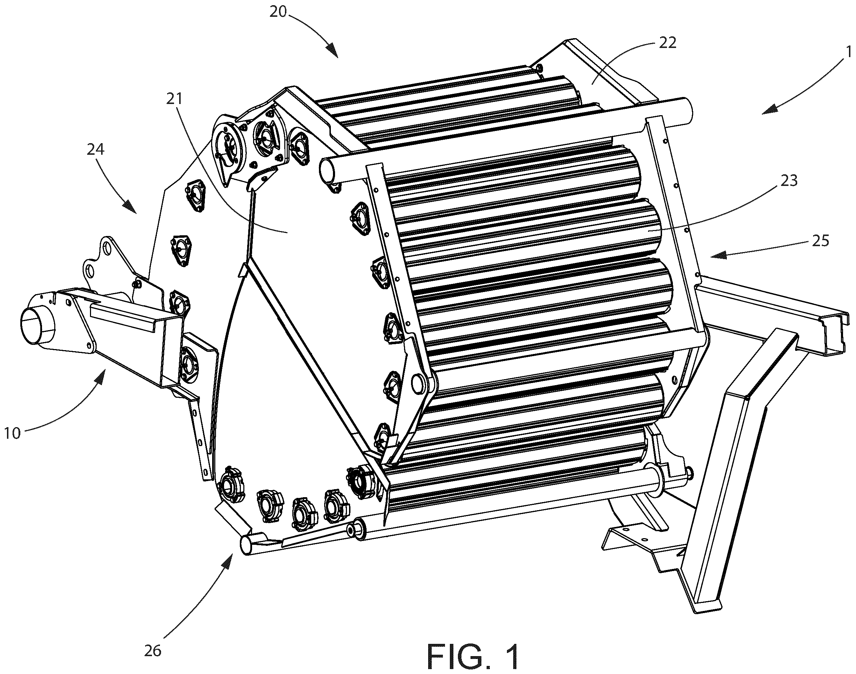

Figure 1 shows an example of an agricultural baler 1. The agricultural baler 1 may comprise a frame 10. The agricultural baler 1 may further comprise a bale chamber 20 for compressing collected crops and forming them into a bale 2. The bale chamber 20 may comprise two side walls 21, 22 and a plurality of compression elements 23 arranged in a substantially circular arrangement. The compression elements 23 may extend between and be rotatably carried by the side walls 21, 22. The bale chamber 20 may comprise a front section 24 comprising at least one compression element 23, an upper section 25 comprising at least one compression element 23 and a lower section 26 comprising at least one compression element 23. The front section 24 may be fixedly attached to the frame 10. The upper section 25 may be pivotally attached to the front section 24. The lower section 26 may be moveably attached to the frame 10. The lower section 26 may perform a first movement wherein the lower section 26 moves from a baling position to a releasing position wherein the bale 2 is released from a grasp of the at least one compression element 23 in the front section 24. The lower section 26 may perform a second movement, wherein the lower section 26 moves from the releasing position to an ejecting position to eject the bale 2 from the bale chamber 20. The bale 2 may follow a different trajectory in the first movement as compared to in the second movement.

In some examples, the respective sections 24, 25, 26 may be attached to subframe sections which may either be attached to the frame 10 or which, in combination, are the frame 10. Optionally in the releasing position the bale 2 is also released from the grasp of the at least one compression element 23 in the upper section 25. Optionally the bale 2, in the releasing position, is positioned completely free from the compression element(s) 23 in the front section 24. Optionally the bale 2, in the releasing position, is positioned in a position where the bale 2 is able to touch the compression element(s) 23 in the front section 24, in which position the compression element(s) 23 do not have a damaging influence on the bale binding or the bale 2 itself. Compression elements 23 may for example be: rollers, belts, chains, slat, slat-and-chain, rollers in combination with belts and/or rollers for guiding belts.

The trajectory of the lower section first movement may be different from the trajectory of the lower section second movement. This makes it possible to specifically control the first movement over the second movement, so that the first movement can be an appropriate releasing movement of the bale 2. In accordance with the described examples, it is desirable to provide a baler 1 which mitigates any damage to the binding material or the bale 2 before and when the bale 2 is ejected from the bale chamber 20.

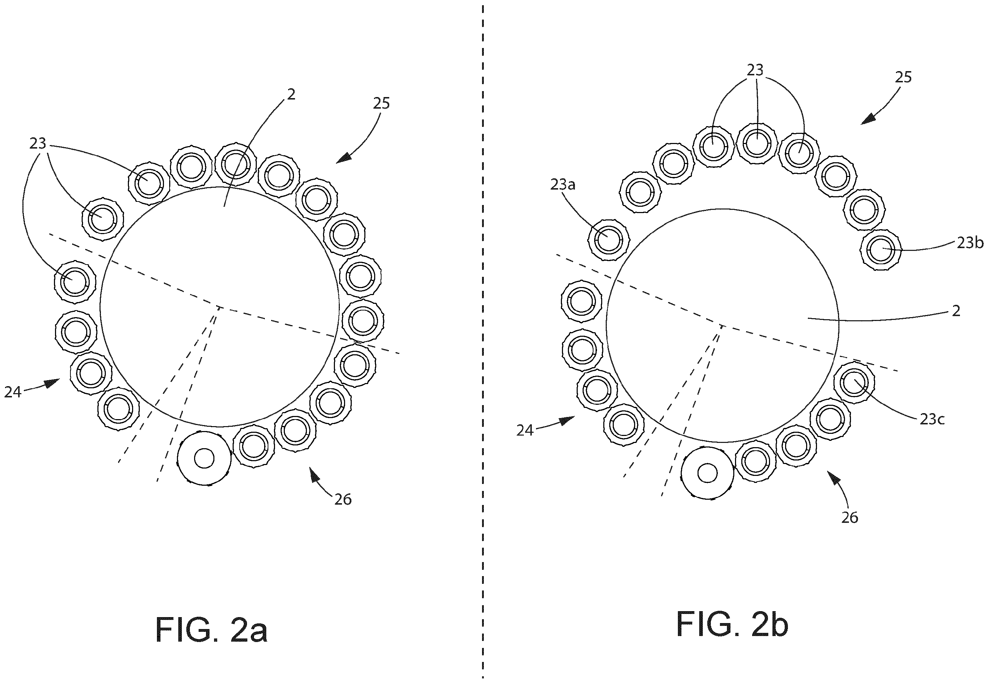

Figures 2a to 2d show simplified schematics of an example of the movements involved in ejecting a bale 2 from the bale chamber 20.

Figure 2a shows an example of the bale chamber 20 in the baling position. In the baling position, each of the front section 24, upper section 25 and lower section 26 may be described as being in their respective baling positions. These may be referred to as the front section baling position, upper section baling position and lower section baling position, respectively. In figure 2a, the compression elements 23 of all sections form a substantially circular arrangement. In the example of figure 2a, each section comprises more than one compression element 23. In the example shown, the compression elements 23 are compression rollers. However, other forms of compression element 23 are envisaged, and each section may only comprise one compression element 23, respectively. In the baling position, agricultural crops may be fed into the baling chamber 20 and rotated until a bale 2 of an appropriate size and/or compression level is formed, at which point the compression elements 23 will apply compressive force onto the bale 2 to ensure a tightly packed bale 2, ready for binding and, if applicable, wrapping. The bale 2 may then be bound with a suitable binding material.

Once a bale 2 with the appropriate bale diameter and/or compression level, and bound with the binding material, is achieved, the bale chamber 20 may be opened to eject the bale 2 from the bale chamber 20. Figure 2b shows an example in which the upper section 25 is moved away from the bale 2. The upper section 25 may pivot about a pivot point in order to open a gap between the upper section 25 and the lower section 26. The pivot point may for example be an axis of a compression element 23. In the example of figure 2b the pivot point is the axis of the forwardmost compression element 23a. The gap through which the bale 2 may pass may be created between the rearmost compression element 23b of the upper section 25 and the rearmost compression element 23c of the lower section 26. In figure 2b, the upper section 25 is in a position between the baling position and the releasing position.

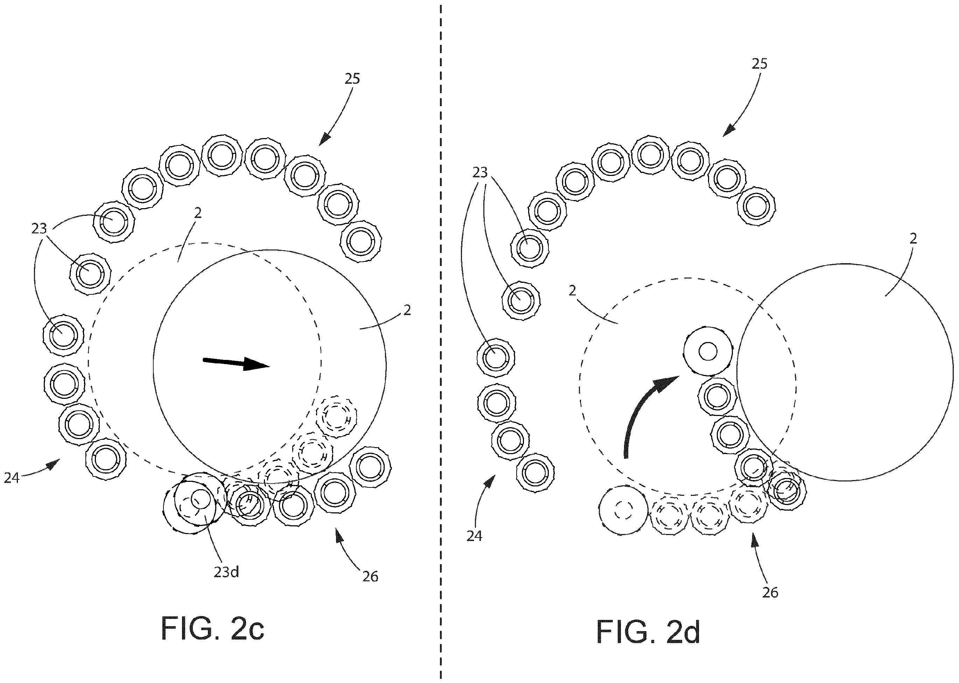

Figure 2c shows an example of the lower section 26 in the releasing position and the upper section 25 continuing to pivot upwards to increase the size of the gap through which the bale 2 may pass. The arrow depicted in figure 2c shows an example of the trajectory of the bale 2, when the lower section 26 undergoes the first movement, between the baling position (dashed lines) and the releasing position (continuous lines). In the releasing position, the bale 2 may be free of the front section 24 and the upper section 25 and may be supported by the lower section 26. In one example, the upper section 25 may move away from the bale 2 first, then the lower section 26 may move from the baling position to the releasing position. The front section 24 may in some examples be fixed to the frame 10 of the baler 1 and so may not move. In this context, the front section 24 may not move relative to the frame 10. As the lower section 26 undergoes the first movement, from the baling position to the releasing position, the bale 2 moves away from the front section 24. By performing this first movement, damage to the bale 2 following baling and binding may be reduced as relative movement during contact between the bale 2 and the various parts of the baler 1 may be minimised.

In figure 2d, the upper section 25 has completed its path to an ejecting position, such that the bale 2 is able to be ejected without contacting the upper section 25 as it passes through the gap. Further, in figure 2d, the lower section 26 has moved from the releasing position (dashed lines) to the ejecting position (continuous lines). In the ejecting position, the bale 2 is tipped off the lower section 26 and ejected from the bale chamber 20. The bale 2 may be ejected for example onto the ground, onto a bale collector or onto a wrapping table for wrapping the bale 2 in a protective wrapping. In one example, the upper section ejecting position may be one in which there is no risk of collision between the compression elements 23 and the bale 2 when ejecting the bale 2. In some examples, the upper section 25 may move just far enough to avoid collision. Optionally, the upper section 25 may move just far enough to avoid damaging the bale 2 when the bale 2 is ejected from the bale chamber 20. It is desirable to reduce overall cycle times to increase baling capacity of the baler 1. When there is neither risk of collision between the compression elements 23 and the bale 2 (based on the position of the upper section 25 and the lower section 26) nor risk of the bale 2 being damaged when the bale 2 is ejected from the bale chamber 20, the bale chamber 20 may be described as being in the fully open position.

In some examples, the lower section 26 may start the second movement before the upper section 25 has reached a position at which there is no risk of damage between the compression elements 23 in the upper section 25 and the bale 2 when ejecting the bale 2. This may help to minimise overall cycle time and therefore increase baling capacity.

The compression elements 23 may in some examples grasp the bale binding and damage the bale binding and/or the bale 2.

By grasping the bale binding material, holes may be pulled in the bale binding. Subsequently, the bale material (crop like e.g. grass, silage, hay or straw) may be grasped and pulled out of the bale 2, for example through the pulled holes in the bale binding, thus leaving holes or cavities in the bale 2.

For grasping, a degree of friction between the compression elements 23 and the bale 2 may be present. This degree of friction can be defined by a friction force (Fw), which is depending on a normal force (Fn) exerted by the bale 2 on the compression elements 23, and a friction coefficient (u). (Fw=Fn*u). Also a certain relative speed (Vr) between the compression element 23 and the bale 2 may be present. Certain combinations/values of the Fw and the relative speed Vr may lead to the compression elements 23 grasping the bale binding material and damaging it. Subsequently the bale 2 itself can be damaged.

The normal force Fn is caused by the compression and elasticity of the bale material. Compressed bale material would like to expand after compression. This expansion force results in a normal force Fn that the bale 2 is exerting onto the compression elements 23.

When there is no contact between the compression elements 23 and the bale 2, there can be no grasping. Because when there is no contact of the bale 2 to the compression elements 23, the Fn is equal to zero, thus the Fw is equal to zero and no grasping and damaging can occur.

When a contact between the compression element 23 and the bale 2 is present and thus a normal force Fn is exerted by the bale 2 to the compression elements 23, it is not necessarily necessary that grasping and thus damage is occurring. It is possible that in a case where the compression elements 23 have contact with the bale 2, the normal force Fn exerting on the bale 2 by the compression elements 23 is not large enough for the combination of friction force Fw and the relative speed Vr to initiate grasping. Therefore, a bale 2 may be released from the grasp of the compression elements 23 at a point where there is still contact between the bale 2 and the compression elements 23.

For example, the compression element 23 may rotate and contact the bale 2 at the same time as the bale 2 is not rotating or rotating at a different circumferential speed compared to the compression element 23, meaning a relative speed Vr is present but the normal force Fn is so low that in this example the combination of the friction force Fw and the relative speed Vr between compression element 23 and bale 2 is not sufficient to inflict a grasping and thus not sufficient to inflict damage of the bale binding material or the bale 2 itself. In this situation one could say that the compression elements 23 only contact the bale 2 very lightly or "stroke" the bale 2, but the compression elements 23 do not damage the bale 2 and its bale binding.

Besides a low normal force Fn in this "stroking" situation, the friction coefficient u can also be a factor in determining if the combination of friction force Fw and relative speed Vr can lead to grasping. Both the normal force and the friction coefficient may depend on other variables, like for example bale material properties or situation variables. Each type of bale material (for example grass or straw) has its own material properties including compressibility, elasticity and specific weight. Above is already stated that the normal force Fn originates from the bale 2 expanding after compression, so each type of bale material will exert, depending on the amount of crop compressed in the bale 2 and its elasticity, a different normal force to the compression elements 23. Also, the moisture content of the bale material is part of this equation: the dryer bale materials (for example straw and hay) tend to have more elasticity and thus exert more normal force, whereas wetter bale material (like silage) tends to have less elasticity. More wet bales (like silage) contain more weight and thus exert a higher normal force Fn to the compression elements 23 due to the higher weight.

Very wet crops, and crops for example containing a lot of free water, may lead to extensive moisture being pressed out of the bale material. In this case, water may run (gush) out of the bale 2 onto the baler 1 and the ground the bale 2 is located on. This water running onto the baler parts can decrease the friction coefficient u between the bale 2 and the compression elements 23, thus decreasing the friction force: the water may work as a lubricant between the compression elements 23 and the bale 2 thus decreasing the friction force between compression elements 23 and the bale 2 making grasping more difficult. A set bale density of the baler 1, where the user of the baler 1 often can set this bale density to a required setting, may also be part of this equation: the higher the bale density setting, the more bale material is compressed in the same bale volume, the higher the expansion forces are, the higher the normal force Fn is, the higher the friction force Fw will be.

The relative speed Vr is defined by the circumferential speed of the compression element Vc and the circumferential speed of the bale Vb (Vr=Vc-Vb). When the Vr is zero it either means:
- That both the Vc and Vb are zero, meaning both the compression elements 23 and the bale 2 are not rotating. In this situation, for example, the drive of the bale chamber 20 is disconnected from the main drive of the baler 1, or the main drive is not activated.
- That the Vc and Vb are equal, meaning the compression elements 23 and the bale 2 have the same circumferential speed. This situation, where Vc is equal to Vb, is approximated in the baling situation, when the bale 2 is formed and rotated in the closed bale chamber 20.

With the Vr being equal to zero, the chance of the compression elements 23 grasping the bale binding and the bale material is minimised.

For completeness, free water, referred to above, may be water which is not inside the crops (inside the plant cells), but water attached to the outside of the crop, such as rainwater attached to the grass when in a rain shower or when irrigating crops.

The release position of the lower section 26, in which the bale 2 is released from the grasp of the compression elements 23, may thus be defined as a position in which the contact forces / friction forces between the bale binding and the compression elements 23 do not supersede the forces needed to damage the bale binding or damage the bale 2 or inflict damage to the bale binding or inflict damage to the bale 2. Following the above explanation, the release position can be a position wherein the bale 2 is contacting the compression elements 23 and can be a position wherein the bale 2 is not contacting the compression elements 23.

The first movement may provide a trajectory for the bale 2 in a direction away from the contact surface of the at least one compression element 23 in the front section 24. The trajectory may be the path the bale 2 follows when the lower section 26 carries out the first and second movement. These may be described as the first trajectory and second trajectory for the first movement and second movement, respectively. The path the bale 2 follows during the first movement may be different from the path the bale 2 follows during the second movement. The lower section 26, by its first and second movements, only facilitates the path the bale 2 is following. The path or trajectory the lower section 26 is following during the first and second movement, may be different from the path or trajectory the bale 2 is following. The trajectory of the bale 2 is important because it is desirable to release the bale 2 from the grasp of the compression elements 23 as fast as possible, in the first movement. Therefore, the trajectory of the bale 2 may follow a path oriented substantially perpendicularly to the contact surface of the compression element(s) 23 in the front section 24. Then, to eject the bale 2, the bale 2 may follow a different path (for example, a different trajectory) as compared to the path/trajectory in the first movement, such as one more suited to ejection of the bale 2 from the bale chamber 20.

The baler 1 may further comprise a controller 43 for controlling the operations performed in and by the baler 1. The controller 43 may comprise a programmable memory capable of storing strategies for the operations performed in and by the baler 1.

In some examples, one or more further sections, in addition to the upper section 25, lower section 26 and front section 24 may be provided. In some other examples, one or more of the upper section 25, lower section 26 and front section 24 may be divided into separate sections.

In some examples, the front section 24 may be fixedly attached to the frame 10 of the baler 1, the upper section 25 may be pivotally attached to the front section 24; and a lower section 26 may be pivotally attached to the frame 10 of the baler 1. Optionally the compression elements 23 comprise compression rollers.

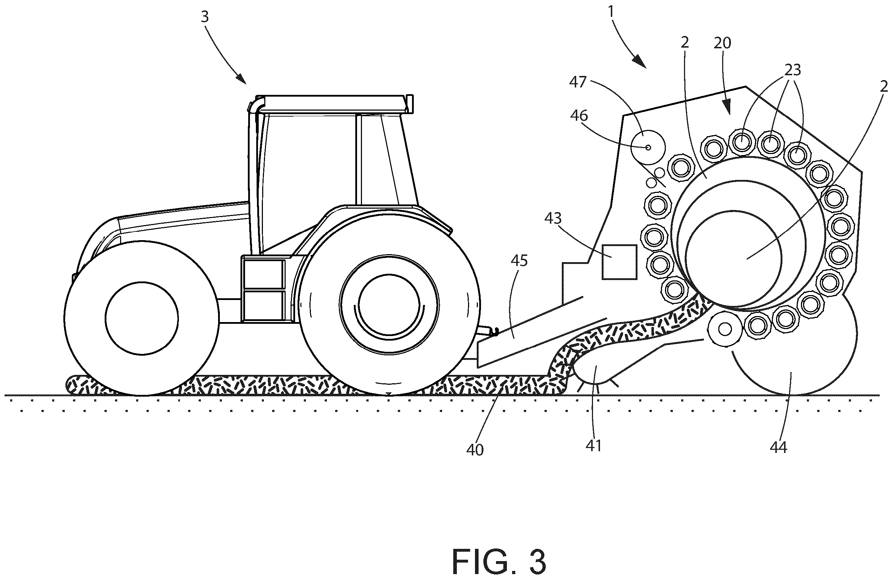

Figure 3 shows an example of a baler 1, when connected to a tractor 3. The baler 1 may be self-propelled or towed by a tractor 3 for driving on public roads and during operation in the field. In some examples, the baler 1 may be stationary. As shown in figure 3, a line or swath 40 of cut agricultural crop may be collected by a pick-up 41 or another kind of collecting means, and transported into a bale chamber 20 for compressing and forming a bale 2 out of the collected crop. The bale 2 may be subsequently wrapped as described below. Otherwise but not limiting, the bale 2 may be deposited on the ground or on a bale collector.

The baler 1 may comprise a bale chamber 20 inside which agricultural crops may be compressed and formed into round bales 2. The bale chamber 20 may comprise bale chamber compression elements 23, in this example compression rollers, for forming the bale 2. The compression elements 23 may be circularly arranged to form a cylindrical or 'round' bale 2 from the collected crop. The compression elements 23 may for example also comprise belts and/or chains and slats.

The baler 1 may further comprise a control unit 43 for controlling baling operations in and of the baler 1. The baler 1 may further comprise wheels 44 to support movement of the baler 1 when towed behind a tractor 3, for example. The wheels 44 may be positioned, and may have a desired size, to provide sufficient ground clearance to allow the baler 1 to pass over bumps or undulations in a field. The baler 1 may further comprise a drawbar 45 to connect to the tractor 3, so that the baler 1 may be towed behind the tractor 3. The wheels 44 and the drawbar 45 of the baler 1 are fixedly connected to the frame 10 of the baler 1.

The baler 1 may also comprise a binding apparatus 46 in which for example a roll of binding material 47 is present. When a bale 2 has reached a desired level of compression and/or size of the bale 2, the binding apparatus 46 may be activated to enter a sheet of binding material 47 into the bale chamber 20 so as to cover the cylindrical surface of the bale 2 with the sheet of binding material 47. The binding material 47 may for example be a sheet, netting, film and/or twine. The operation of the binding process may be controlled by the controller 43.

In an example, there is provided, a combination baler and bale wrapper comprising the agricultural baler 1 described above. The above-described baler 1 can be part of a combination baler / bale wrapper machine. In a combination baler / bale wrapper the bound bale is ejected onto a bale wrapper section of the combination baler / bale wrapper. The bale wrapper section completely envelopes the bale in a substantially airtight manner with a stretch film. This is done to conserve the crop and thus to be able to keep the crop in a suitable condition for farm animal fodder for longer.

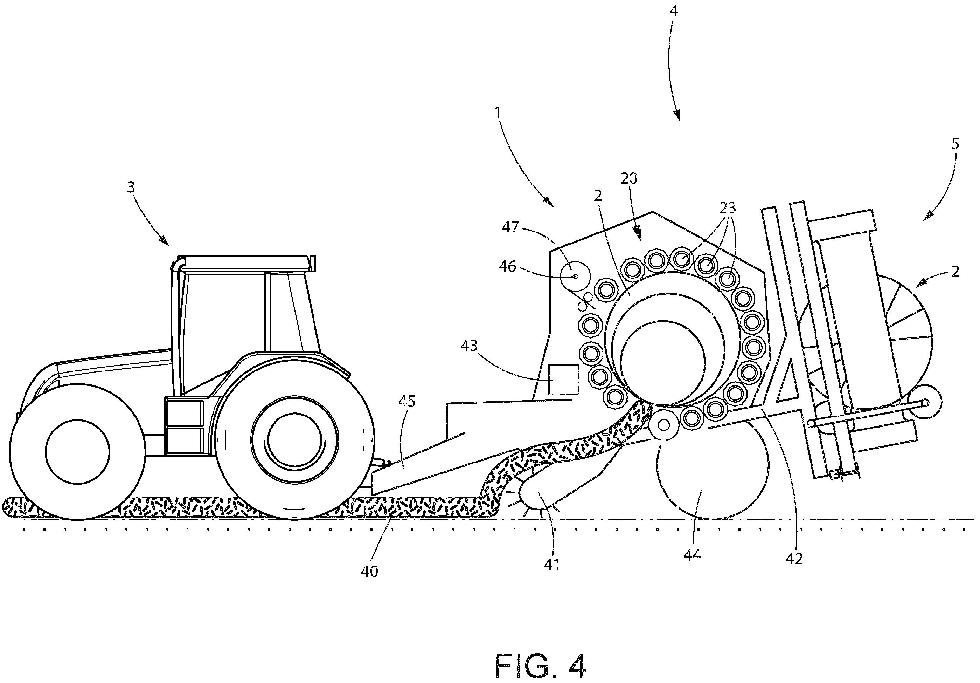

Figure 4 shows an example of a combination baler / bale wrapper 4, when connected to a tractor 3. The baler/bale wrapper combination 4 may be self-propelled or towed by a tractor 3 for driving on public roads and during operation in the field. In some examples, the baler/bale wrapper combination 4 may be stationary.

As shown in figure 4, a line or swath 40 of cut agricultural crop may be collected by a pick-up 41 or another kind of collecting means, and transported into a bale chamber 20 for compressing and forming a bale 2 out of the collected crop. The bale 2 is subsequently wrapped and deposited in the field by the bale wrapper section 5.

As stated above, the baler/bale wrapper combination 4 may further comprise a baler section 1. The baler section 1 and the bale wrapper section 5 may be connected to a main frame 42. The baler section 1 may comprise a bale chamber 20 inside which agricultural crops may be compressed and formed into round bales 2. The bale chamber 20 may comprise bale chamber compression elements 23, in this example compression rollers, for forming the bale 2. The compression elements 23 are circularly arranged in order to form a cylindrical or 'round' bale 2 from the collected crop. The compression elements 23 may also comprise belts and/or chains, slats.

Further shown in figure 4, the combination baler / bale wrapper 4 may further comprise a control unit 43 for controlling baling and/or wrapping operations in and of the combination baler / bale wrapper 4. The combination baler / bale wrapper 4 may further comprise wheels 44 to support movement of the combination baler / bale wrapper 4 when towed behind a tractor 3, for example. The wheels 44 may be positioned, and may have a desired size, to provide sufficient ground clearance to allow the combination baler /bale wrapper 4 to pass over bumps or undulations in a field. The combination baler / bale wrapper 4 may further comprise a drawbar 45 to connect to the tractor 3, so that the combination baler / bale wrapper 4 may be towed behind the tractor 3. The drawbar 45 and the wheels 44 are fixedly connected to the frame 42.

The baler section 1 of the combination baler / bale wrapper 4 also comprises a binding apparatus 46 in which for example a roll of binding material 47 is present. When a bale 2 has reached a desired level of compression and/or size of the bale 2, the binding apparatus 46 is activated to for example enter a sheet of binding material 47 into the bale chamber 20 so as to cover the cylindrical surface of the bale 2 with the sheet of binding material 47. The binding material 47 may for example be a sheet, netting, film and/or twine. The operation of the binding process may be controlled by the controller 43.

Optionally the bale wrapper section 5 of the combined baler / bale wrapper machine 4 comprises a bale support, comprising first and second bale support elements, for supporting a bale and rotating the bale about a first axis; and a film dispenser holder for holding and rotating a film dispenser, the film dispenser comprising a film holder for holding a roll of stretch film, to dispense the film when the film dispenser is rotated, the film dispenser holder being configured to provide relative rotation between the bale support and the film dispenser about a second axis that extends substantially perpendicular to the first axis so that the stretch film applied to the bale forms a bale wrapping that substantially completely covers the bale; wherein the first bale support element is a receiving support element, located on a receiving side of the bale support, and comprises at least one receiving support roller to receive and guide the bale into a position for wrapping, and the second bale support element is an unloading support element, located on an unloading side of the bale support, and comprises at least one unloading support roller.

Optionally the stretch film used in the bale wrapper section 5 of the combined baler / bale wrapper 4 is applied to the bale 2 as a film strip and in such a manner that a portion of a first film strip edge is positioned adjacent to the first bale support element and simultaneously a portion of a second film strip edge, which second edge is opposite to the first film strip edge, is positioned adjacent the second bale support element.

In some examples, the second movement of the lower section 26 may provide a trajectory for the bale 2 in at least an upwardly or a downwardly direction. Optionally the bale 2 is ejected from the bale chamber 20 in an upwardly outwardly direction. Optionally the bale 2 is ejected from the bale chamber 20 in a downwardly outwardly direction.

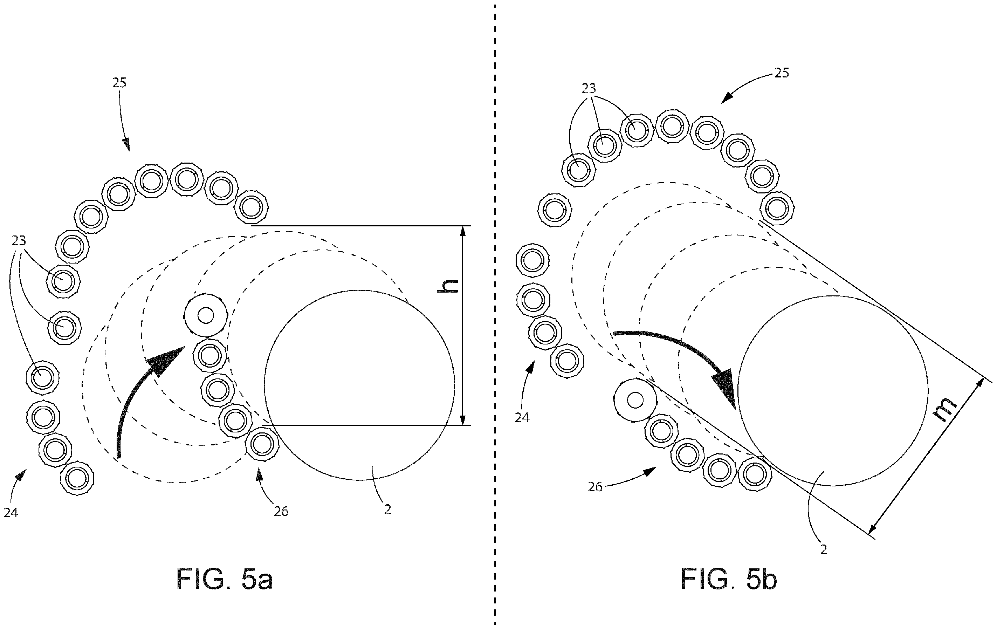

Figure 5a shows an example in which the bale 2 is ejected from the bale chamber 20 in an upwardly direction. In this example, the bale 2 is positioned on the lower section 26, which is in the releasing position. The lower section 26 then moves from the releasing position to the ejection position by pivoting upwards so as to tip the bale 2 upwards and out of the bale chamber 20. The distance h may for example be the minimum gap required for the bale 2 to pass safely (undamaged) out of the bale chamber 20. The distance h may for example be the diameter of the bale 2. The distance h may optionally be slightly larger than the diameter of the bale 2, for example, in case the diameter of the bale equals 125cm, the distance h may optionally be 130cm or larger. As such, the distance h may for example be at least approximately 4% larger than the diameter of the bale 2. However, reducing distance h as far as possible, without risking damage to the bale 2 or binding material, may help to reduce cycle times and therefore increase the capacity of the baler 1 in terms of bales produced per hour.

In figure 5b, there is shown an example in which the bale 2 is ejected from the bale chamber 20 in a downwardly direction. In this example, the bale 2 is positioned on the lower section 26, which is in the releasing position. The lower section 26 then moves from the releasing position to the ejection position by pivoting downwards so as to tip the bale 2 downwards and out of the bale chamber 20. The distance m may for example be the minimum gap required for the bale 2 to pass safely (undamaged) out of the bale chamber 20. The distance m may for example be the diameter of the bale 2. The distance m may optionally be slightly larger than the diameter of the bale 2, for example, in case the diameter of the bale equals 125cm, the distance m may optionally be 130cm or larger. As such, the distance m may for example be at least approximately 4% larger than the diameter of the bale 2. However, reducing distance m as far as possible, without risking damage to the bale 2 or binding material, may help to reduce cycle times and therefore increase the capacity of the baler 1 in terms of bales produced per hour.

The pivot point for the upward pivot of the lower section 26 shown in figure 5a may be different to the pivot point for the downward pivot of the lower section 26 shown in figure 5b. For example, the pivot point for the upwardly ejection of the bale 2 may be towards the rear end of the lower section 26, such that the forward-facing part of the lower section 26 may be raised up to push the bale 2 in the upwardly direction. For example, the pivot point for the downwardly ejection of the bale 2 may be towards the front end of the lower section 26, such that the rearward-facing part of the lower section 26 may be lowered to release the bale 2 in the downwardly direction. For completeness, the forward-facing part may be the part of the lower section 26 closest to the front section 24. The rearward-facing part may be the part of the lower section 26 closest to the gap through which the bale 2 is ejected.

The lower section 26 may be rotationally and/or translationally moved in the first movement. For example, the lower section 26 may pivot slightly to move from the baling position to the releasing position so as to define a cradle, mirroring the contour of the round bale 2, on which the bale 2 may rest without further support or holders restricting movement of the bale 2. The lower section 26 may also, at the same time as the pivot, move translationally from the baling position to the releasing position. This translational movement may assist the release of the bale 2 from the grasp of the front and upper sections 24, 25. For example, the translational movement may bring the bale 2 away from the front and upper sections 24, 25 such that there is no contact between the bale 2 and the front section 24 and/or upper section 25. The translational movement and the pivotal movement together may comprise the first movement, in which the lower section 26 moves from the baling position to the releasing position. In some examples, the first movement may not lead to no contact, but to minimal contact in which the compression elements 23 may "stroke" the bale 2, but the contact between the compression elements 23 and bale 2 is so small (the force involved are so small) that no damage is caused to either the bale 2 or the bale binding material.

The lower section 26 may be rotationally and/or translationally moved in the second movement. Figures 5a and 5b show two examples of the second movement. For example, the lower section 26 may move from the releasing position, as described above, in which the bale 2 is supported on the lower section 26, but released from contact with the front and upper sections 24, 25. The lower section 26 may then pivot, either upward or downward, as described in relation to figures 5a and 5b, respectively, until the bale 2 rolls off the lower section 26 and is thereby ejected from the bale chamber 20. In combination with this pivotal movement, the lower section 26 may move translationally to assist ejection of the bale 2. In other words, a translational movement may be included to encourage the bale 2 to roll off the lower section 26. This translational movement may include a rearward movement to push or nudge the bale 2, so that the rolling is started.

The first movement may be performed simultaneously with an opening of the bale chamber 20 and/or moving of the upper section 25.

The first movement may be started after a specific period of time after the bale chamber 20 has started to open and/or moving of the upper section 25 has started. In another example, the first movement may be started after a specific distance the bale chamber 20 has opened by and/or the upper section 25 has moved by. In such examples, the bale binding and/or the bale 2 may be prevented from colliding with or being damaged by the upper section 25 during the first movement.

In some examples, the first movement may be performed simultaneously with the opening of the bale chamber 20/ moving of the upper section 25. This may reduce the overall cycle times and increase baling capacity.

Timing and/or travel of the first and second movements may be adjustable and/or controlled by a control unit. Optionally the timing of the movements and/or the distance by which the bale 2 is released from the grasp of the front section compression element(s) is adjustable to be able to accommodate for different type crops (dry/wet) and to optimize the overall cycle times for optimizing baling capacity.

Optionally the timing of the movements and/or the distance the bale 2 is released from the grasp of the front section compression elements is controlled by the controller 43. This enables comfort for the driver, who inputs a setting on a controller interface and the controller 43 controls the desired setting. Adjusting timing of the first and second movements may be a relatively low-cost option for controlling the first and second movements, which may be mechanically linked. Alternatively, travel of the first and second movements may be controlled using sensors, improving reliability and avoiding potential disruption to the baling, releasing and ejecting actions.

Certain bale releasing strategies, which may depend on, for example but not limited to, bale material properties, baler 1 operational settings and/or environmental properties, may be stored in a memory of the controller 43. These strategies may be selected by the driver and followed by the controller 43 when controlling the desired strategy. Optionally the strategies may be selected and followed by the controller 43 as a result of a combination of inputs from sensors measuring, for example but not limited to, bale material properties, baler 1 operational settings and environmental properties.

The lower section 26 may be configured to reach the releasing position before the upper section 25 reaches an upper section ejecting position. The second movement may be started before the upper section 25 reaches the upper section bale ejecting position. Optimal timing, for example start times and/or end times of the lower section 26 movements relative to movements and positions of the upper section 25, has the advantage that overall cycle times may be reduced so as to increase baling capacity in terms of bales produced per hour. Movements like for example the upper section 25 movement on the one hand and the lower section 26 first and second movement on the other hand may be subsequent to each other but also may run partly simultaneously or fully simultaneously.

In some examples, the lower section 26 is configured to reach the releasing position before the upper section 25 reaches an ejecting position, in which the bale 2 is released from the grasp of the at least one compression element 23 in the upper section 25. In such an example, the ejection position at which the bale 2 is released from the grasp of the upper section 25 may depend on the diameter of the bale 2.

In some examples, the second movement is started before the upper section 25 reaches the ejecting position in which the bale 2 is released from the grasp of the at least one compression element 23 in the upper section 25. In such an example, the ejection position at which the bale 2 is released from the grasp of the upper section 25 may depend on the diameter of the bale 2.

In some examples, the lower section 26 is configured to reach the releasing position before the upper section 25 reaches an ejecting position, where the at least one compression element 23 in the upper section 25 is not able to grasp the bale 2 during the movement where the bale 2 is ejected from the bale chamber 20. The ejecting position may depend on the diameter of the bale 2.

In some examples, the second movement of the lower section 26 is started before the upper section 25 reaches an ejecting position, where the at least one compression element 23 in the upper section 25 is not able to grasp the bale 2 during the movement where the bale 2 is ejected from the bale chamber 20.

In some examples, the lower section 26 is configured to reach the releasing position before the upper section 25 reaches an ejecting position, which is desirable in order for the bale 2 to be ejected from the bale chamber 20 without the bale 2 touching the at least one compression element 23 in the upper section 25.

In some examples, the second movement of the lower section 26 is started before the upper section 25 reaches an ejecting position, which is desirable in order for the bale 2 to be ejected from the bale chamber 20 without the bale 2 touching the at least one compression element 23 in the upper section 25.

In some examples, the lower section 26 is configured to reach the releasing position before the upper section 25 reaches an ejecting position, in which the bale 2 is able to be ejected without damaging the bale 2 by the at least one compression element 23 in the upper section 25.

In some examples, the second movement of the lower section 26 is started before the upper section 25 reaches an ejecting position, in which the bale 2 is able to be ejected without damaging the bale 2 by the at least one compression element 23 in the upper section 25.

For example, the compression element 23b may contact or "stroke" the bale 2 during ejection of the bale 2 from the bale chamber 20. However, such contact is minimal enough that no damage is caused to the bale 2 or the binding material. The compression element 23b may in some examples not contact the bale 2 when ejecting the bale 2 from the bale chamber 20.

The second movement may be performed subsequently to the first movement. The bale 2 may be released before ejecting and thus the chance of damage to the bale 2 is lowered. Optionally the first movement may flow smoothly and continuously over into the second movement which provides for the bale 2 to flow smoothly and continuously from its first trajectory into its second trajectory. A smooth and continues flow of movement may minimize damage to the bale 2 when it is following both trajectories.

All of the at least one compression element 23 in the lower section 26 may be located in a different position when in the releasing position relative to their respective positions when in the baling position. This makes it possible the lower section 26 is positioned in the most optimal way for the bale 2 to be released from the front section 24, in the shortest time possible to minimize overall cycle times and increase baling capacity. In such as example, none of the at least one compression element 23 may be located in the same position when in the releasing position relative to their respective positions when in the baling position. In other words, all of the at least one compression element 23 in the lower section 26 may move between baling and releasing. Optionally at least one compression element 23 in the lower section 26 may have the same position in the baling and the releasing position.

At least one compression element 23 in the lower section 26 may be located in a same position when the at least one compression element 23 in the lower section 26 is in the ejecting position relative to its position when in the baling position. For example the rearmost compression roller 23c drops down in the releasing position for optimal releasing of the bale 2, and potentially lining up with the bale wrapper section 5 first bale support element in the ejecting position, if the bale 2 is to be ejected onto a wrapping table for wrapping.

A rearmost compression element 23c of the at least one compression element 23 in the lower section 26 may have a position with larger distance to a surface the baler 1 is located on when in the baling position and/or the ejecting position compared with when in the releasing position.

In some examples, the rearmost compression element 23c may be located in a different position when the lower section 26 is in the baling position when compared to the releasing position, and again when compared to the ejecting position. The rearmost compression element 23c may be positioned so that the distance to the ground, when the lower section 26 is in the releasing position, is smaller than when in one or both of the baling position or the ejecting position. This may help to release the bale 2 from the grasp of the front section 24 and/or the upper section 25 and may help to cradle the bale 2 after baling and before ejection. Lowering the rearmost compression element 23c from baling to releasing may have the advantage that the bale 2 is taken away from the front section 24 very quickly while maintaining a low centre of gravity position of the bale 2 and baler 1, which may improve stability. Moving the rearmost compression element 23c up again in the second movement, from release to ejecting, may help to line up the rearmost compression element 23c with means for passing the bale 2 onto the bale support, for easy and accurate bale 2 transfer to the wrapper section.

A bale chamber starter roller 23d, as shown for example in figure 2c, may have a position with larger distance to the surface the baler 1 is located on when in the releasing position compared with when in the baling position. The lower section 26 is formed like a cradle, and moving the starter roller 23d upwards makes the bale 2 follow the cradle so that an earlier and more reliable releasing of the bale 2 from the at least one compression element 23 in the front section 24 may be achieved.

The first movement and/or the second movement is derived from the movement of the upper section 25.

Optionally the movement for the first and/or the second movement of the lower section 26 is provided by an actuator or motor. Optionally the actuator or motor is hydraulicly, pneumatically or electrically operated. The first and second movement may be provided by a separate actuator or motor for each of the first and second movement. In this case separate timing of both movements is possible which may be advantageous in optimizing overall cycle times for optimizing baling capacity in terms of bales produced per hour.

Optionally the movement for the first and/or second movement is mechanically operated, the movement originating from a hydraulically, pneumatically or electrically operated actuator or motor. Providing one actuator for both the first and second movement may save costs leading to an overall cheaper baler 1.

Optionally the movement for the second movement is hydraulically, pneumatically, electrically or mechanically derived from the movement of the first movement. In this example, fewer parts are required leading to an overall cheaper baler 1. The second movement may for example be linked mechanically to the first movement for example by rods and plates. Optionally the second movement is hydraulically or pneumatically linked to the hydraulic or pneumatic actuators of the first movement.

Optionally the movement for the first and/or second movement is hydraulically, pneumatically, electrically or mechanically derived from the movement of the upper section 25. This may use fewer parts, leading to a cheaper baler 1, while ensuring the first and second movement follows the movement of the upper section 25 reliably and at the correct time/position in the cycle. The first and second movement are for example taken by for example rods and plates from the upper section 25. Optionally the first and second movement are hydraulically or pneumatically linked to the hydraulic or pneumatic actuators of the upper section 25.

Optionally the first and second movements are provided by the gravity of the bale and or the compression forces of the bale. For example, the first and/or second movement may be carried out passively under the weight of the bale 2 and/or the compression force of the bale 2. This provides for a cheaper overall baler 1 as no active movement providers are necessary.

After the bale has been ejected from the baling chamber 20, the baling chamber sections 24, 25, 26 may return to their respective baling positions. This can be done in any order in which each of the sections will reach their respective baling position and will not collide with another section during movement. For example, first the lower section 26 may move from the ejecting to the baling position and afterwards the upper section 25 may move from the ejecting position into the baling position. Optionally first the upper section 25 may move from the ejecting position into the baling position and afterwards the lower section 26 may move from the ejecting position into the baling position. Optionally the lower section 26 and the upper section 25 may move partially or fully simultaneously when moving from the ejecting position into the baling position. With all the sections 24, 25, 26 in the baling position, the process of collecting new bale material and forming a new bale 2 may be started.

There is further provided, a method for releasing and ejecting a bale from an agricultural baler comprising: a frame; a bale chamber for compressing collected crops and forming them into a bale, wherein the bale chamber comprises two side walls and a plurality of compression elements arranged in a substantially circular arrangement, the compression elements extend between and are rotatably carried by the side walls, and the bale chamber comprises a front section comprising at least one compression element, an upper section comprising at least one compression element and a lower section comprising at least one compression element, wherein the front section is fixedly attached to the frame, the upper section is pivotally attached to the front section, the lower section is moveably attached to the frame. The method may comprise performing S01, by the lower section, a first movement wherein the lower section moves from a baling position to a releasing position wherein the bale is released from a grasp of the at least one compression element in the front section. The method may further comprise performing S02, by the lower section, a second movement, wherein the lower section moves from the releasing position to an ejecting position to eject the bale from the bale chamber. The bale may follow a different trajectory in the first movement as compared to in the second movement.

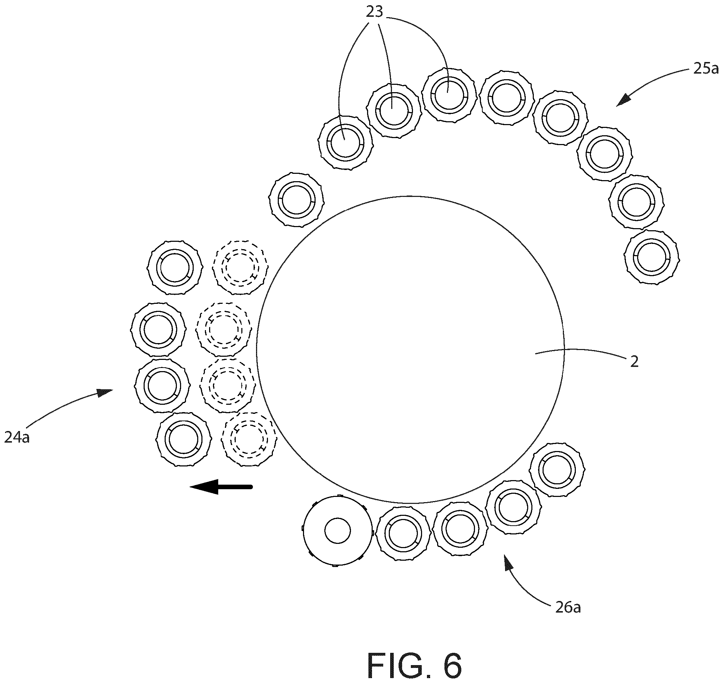

There is further provided, in an example, an agricultural baler as shown in figure 6. The agricultural baler may comprise a frame. The agricultural baler may further comprise a bale chamber for compressing collected crops and forming them into a bale. The bale chamber may comprise two side walls and a plurality of compression elements 23 arranged in a substantially circular arrangement. The compression elements 23 may extend between and are rotatably carried by the side walls. The bale chamber may comprise a front section 24a comprising at least one compression element 23, an upper section 25a comprising at least one compression element 23 and a lower section 26a comprising at least one compression element 23. The upper section 25a may be pivotally attached to the frame or pivotally attached to the front section 24a. The lower section 26a may be pivotally attached to the frame. The front section 24a may be moveably attached to the baler frame. The front section 24a may be configured to perform a first movement wherein the front section 24a moves from a baling position to a releasing position, wherein the bale may be released from a grasp of the at least one compression element 23 in the front section 24a.

In this example, the front section 24a is moveable relative to the frame 10, 42 of the baler 1. This allows the front section 24a to move away from the bale 2 to prevent damage to either the bale 2 or the material with which the bale 2 is bound (binding material). In some examples the front section 24a may move away from the bale 2 before the upper section 25a or the lower section 26a move. Further, the first movement of the front section 24a may be performed at the same time as the upper section 25a moves from the baling position into the ejecting position. In another example the first movement of the front section 24a may be performed at the same time as the lower section 26a moves from the baling position into the ejecting position.

There is further provided a method for releasing and ejecting a bale from an agricultural baler comprising: a frame; a bale chamber for compressing collected crops and forming them into a bale; wherein the bale chamber comprises two side walls and a plurality of compression elements arranged in a substantially circular arrangement, the compression elements extend between and are rotatably carried by the side walls, and the bale chamber comprises a front section comprising at least one compression element, an upper section comprising at least one compression element and a lower section comprising at least one compression element, and further wherein the upper section is pivotally attached to the frame or pivotally attached to the front section, the lower section is pivotally attached to the frame, the front section is moveably attached to the baler frame. The method may comprise performing 503, by the front section, a first movement wherein the front section moves from a baling position to a releasing position, wherein the bale may be released from a grasp of the at least one compression element in the front section.

Various modifications of the invention are of course possible. The subject matter defined in each of the claims may be combinable with that of any other claim. Similarly, examples and embodiments described above are for illustrative purposes only and features of one example may be combinable with those of other examples, as will be clear to the skilled person.

## Claims

1. An agricultural baler comprising:
a frame;
a bale chamber for compressing collected crops and forming them into a bale, wherein
the bale chamber comprises two side walls and a plurality of compression elements arranged in a substantially circular arrangement,
the compression elements extend between and are rotatably carried by the side walls, and
the bale chamber comprises a front section comprising at least one compression element, an upper section comprising at least one compression element and a lower section comprising at least one compression element, wherein
the front section is fixedly attached to the frame,
the upper section is pivotally attached to the front section,
the lower section is moveably attached to the frame, and
the lower section is configured to perform a first movement wherein the lower section moves from a baling position to a releasing position wherein the bale is released from a grasp of the at least one compression element in the front section, and perform a second movement, wherein the lower section moves from the releasing position to an ejecting position to eject the bale from the bale chamber,
wherein the bale follows a different trajectory in the first movement as compared to in the second movement.

2. The agricultural baler of claim 1, wherein the first movement provides a trajectory for the bale in a direction away from the contact surface of the at least one compression element in the front section.

3. The agricultural baler of claim 1, wherein the second movement provides a trajectory for the bale in at least an upwardly or a downwardly direction.

4. The agricultural baler of any preceding claim, wherein the lower section is rotationally and/or translationally moved in the first movement.

5. The agricultural baler of any preceding claim, wherein the lower section is rotationally and/or translationally moved in the second movement.

6. The agricultural baler of any preceding claim, wherein the first movement is performed simultaneously with an opening of the bale chamber and/or moving of the upper section.

7. The agricultural baler of any of claims 1- 5, wherein
the first movement is started after a specific period of time after the bale chamber has started to open and/or moving of the upper section has started; or
the first movement is started after a specific distance the bale chamber has opened by and/or the upper section has moved by.

8. The agricultural baler of any preceding claim, wherein timing and/or travel of the first and second movements is adjustable and/or controlled by a control unit.

9. The agricultural baler of any preceding claim, wherein the lower section is configured to reach the releasing position before the upper section reaches an upper section bale ejecting position.

10. The agricultural baler of any preceding claim, wherein the second movement is started before the upper section reaches the upper section bale ejecting position.

11. The agricultural baler of any preceding claim, wherein the second movement is performed subsequently to the first movement.

12. The agricultural baler of any preceding claim, wherein all of the at least one compression elements in the lower section are located in a different position when in the releasing position relative to their respective positions when in the baling position.

13. The agricultural baler of any of claims 1 - 11, wherein at least one compression element in the lower section is located in a same position when the at least one compression element in the lower section is in the ejecting position relative to its position when in the baling position.

14. The agricultural baler of any preceding claim, wherein a rearmost compression element of the at least one compression element in the lower section has a position with larger distance to a surface the baler is located on when in the baling position or the ejecting position compared with when in the releasing position.

15. The agricultural baler of any preceding claim, wherein a bale chamber starter roller has a position with larger distance to the surface the baler is located on when in the releasing position compared with when in the baling position.

16. The agricultural baler of any preceding claim, wherein the first movement and/or the second movement is derived from the movement of the upper section.

17. A combination baler and bale wrapper comprising the agricultural baler of any preceding claim.

18. A method for releasing and ejecting a bale from an agricultural baler comprising: a frame; a bale chamber for compressing collected crops and forming them into a bale, wherein the bale chamber comprises two side walls and a plurality of compression elements arranged in a substantially circular arrangement, the compression elements extend between and are rotatably carried by the side walls, and the bale chamber comprises a front section comprising at least one compression element, an upper section comprising at least one compression element and a lower section comprising at least one compression element, wherein the front section is fixedly attached to the frame, the upper section is pivotally attached to the front section, the lower section is moveably attached to the frame, the method comprising:
performing, by the lower section, a first movement wherein the lower section moves from a baling position to a releasing position wherein the bale is released from a grasp of the at least one compression element in the front section, and
performing, by the lower section, a second movement, wherein the lower section moves from the releasing position to an ejecting position to eject the bale from the bale chamber,
wherein the bale follows a different trajectory in the first movement as compared to in the second movement.

19. An agricultural baler comprising:
a frame;
a bale chamber for compressing collected crops and forming them into a bale; wherein
the bale chamber comprises two side walls and a plurality of compression elements arranged in a substantially circular arrangement,
the compression elements extend between and are rotatably carried by the side walls, and
the bale chamber comprises a front section comprising at least one compression element, an upper section comprising at least one compression element and a lower section comprising at least one compression element, and further wherein
the upper section is pivotally attached to the frame or pivotally attached to the front section,
the lower section is pivotally attached to the frame,
the front section is moveably attached to the baler frame, and
the front section is configured to perform a first movement wherein the front section moves from a baling position to a releasing position, wherein the bale is released from a grasp of the at least one compression element in the front section.

20. A method for releasing and ejecting a bale from an agricultural baler comprising: a frame; a bale chamber for compressing collected crops and forming them into a bale; wherein the bale chamber comprises two side walls and a plurality of compression elements arranged in a substantially circular arrangement, the compression elements extend between and are rotatably carried by the side walls, and the bale chamber comprises a front section comprising at least one compression element, an upper section comprising at least one compression element and a lower section comprising at least one compression element, and further wherein the upper section is pivotally attached to the frame or pivotally attached to the front section, the lower section is pivotally attached to the frame, the front section is moveably attached to the baler frame, the method comprising:
performing, by the front section, a first movement wherein the front section moves from a baling position to a releasing position, wherein the bale is released from a grasp of the at least one compression element in the front section.
